# FASCICULE DE BREVET EUROPEEN

(11) **EP 0 448 452 B1**
(45) Date de publication et mention de la délivrance du brevet: **20.04.1994**
(21) Numéro de dépôt: 91400719.0
(22) Date de dépôt: 18.03.1991
(51) Int. Cl.: B60S 1/40

(54) **Connecteur destiné à solidariser un balai d'essuie glace et un bras d'essuie-glace**
Verbindungsglied, um einen Scheibenwischerarm mit einem Scheibenwischerblatt zu verbinden
Connector for connecting a windscreen wiper arm to a windscreen wiper blade

(30) Priorité: 19.03.1990 FR 9003473
(43) Date de publication de la demande: 25.09.1991
(73) Titulaire: VALEO SYSTEMES D'ESSUYAGE, 78180 Montigny-Le-Bretonneux (FR)
(72) Inventeur: Schon, Wilfrid, F-63580 St. Etienne/Usson (FR)
(74) Mandataire: Gamonal, Didier

(56) Documents cités:
- DE-A- 3 618 326
- FR-A- 2 631 300

## Description

La présente invention se rapporte à un connecteur apte à solidariser un balai d'essuie-glace avec un bras d'essuie-glace.

Les connecteurs de l'Art Antérieur, tel que décrits dans les documents DE-28 29 437, DE-36 18 326, FR-2 631 300, présentent habituellement un profil longitudinal sensiblement en forme de "U" à deux branches reliées par une partie courbe et comportent des moyens d'accrochage sur le bras et des moyens de réception d'un axe porté par le balai d'essuie-glace en permettant ainsi une liaison à articulation entre le bras et le balai.

Dans l'application à une solidarisation entre un balai et un bras présentant une extrémité recourbée conformée en forme de crochet, il est prévu, d'une part, que le connecteur soit logé dans une ouverture que présente la monture de ce balai, ouverture à travers laquelle s'étend l'axe transversal permettant la liaison articulée du bras et du balai et, d'autre part, que ce connecteur puisse se loger dans la concavité de l'extrémité recourbée du bras en étant immobilisé par rapport à celui-ci.

Lors d'une intervention sur le balai, il est prévu que la dimension longitudinale de l'ouverture du balai soit telle qu'il n'est pas nécessaire de soulever le bras d'une grande course pour lui faire quitter le connecteur auquel il était lié.

De manière pratique, il est prévu que l'espace entre l'axe de réception et le bord extrême transversal de l'ouverture soit d'une dimension telle que la plus grande dimension de l'extrémité recourbée puisse être comprise dans cet espace.

Ainsi, lors des opérations de montage ou de démontage du balai par rapport au bras, le bras reste sensiblement parallèle au balai en pouvant, soit quitter, soit pénétrer dans cet espace, sans nécessiter un grand débattement dudit bras.

Comme déjà décrit dans le sus-mentionné document FR-A-2 631 300, conforme au préambule de la revendication 1, le connecteur comporte des bordures qui se prolongent, en direction opposée à celles des extrémités libres des branches, par des parois longitudinales reliées à leurs extrémités par une paroi transversale, ces parois coopérant avec les bords longitudinaux et transversaux de l'ouverture du balai.

Ces parois délimitent avec la partie courbe du profil longitudinal du "U" un espace, et permettent ainsi d'éviter une éventuelle détérioration de l'extrémité du bras et des bords de l'ouverture lors des interventions.

En utilisation, il subsiste donc un espace libre entre l'extrémité recourbée du bras, les bords longitudinaux et le bord transversal de l'ouverture du balai qui nuit, d'une part, à l'esthétique de l'ensemble et qui, d'autre part, peut permettre l'introduction d'objets indésirables pouvant nuire au bon fonctionnement du balai.

La présente invention permet de remédier aux inconvénients mentionnés ci-dessus, en présentant un connecteur dans lequel subsiste toujours l'espace utile aux opérations de montage et de démontage, mais dans lequel cet espace est ensuite obstrué.

Selon la présente invention, le connecteur du type divulgué par FR-A-2 631 300 comporte un capot apte à obstruer l'espace lorsque l'extrémité conformée en crochet du bras d'essuie-glace repose sur la section en "U" du connecteur.

Grâce à l'invention, l'espace subsistant entre l'extrémité recourbée et le bord transversal de l'ouverture du balai est ainsi occulté par une pièce qui rend de plus l'ensemble esthétique.

Différents modes de réalisations sont précisés dans les revendications dépendantes 2 à 14.

Les autres caractéristiques et avantages de l'invention vont ressortir maintenant de la description qui va suivre en se référant aux dessins annexés et sur lesquels :
- la figure 1 montre une vue de dessus du connecteur selon l'invention ;
- la figure 2 montre une vue en coupe longitudinale selon la ligne AA de la figure 1 ;
- la figure 3 est une vue de détail à plus grande échelle selon le repère B de la figure 2 ;
- la figure 4 est une vue à plus grande échelle selon le repère C de la figure 2 ;
- la figure 5 est également une vue à plus grande échelle selon le repère D de la figure 2 ;
- la figure 6 montre la disposition du connecteur selon l'invention sur un balai ;
- la figure 7 est une vue dans laquelle il est montré le connecteur selon l'invention dans une configuration finale d'assemblage.

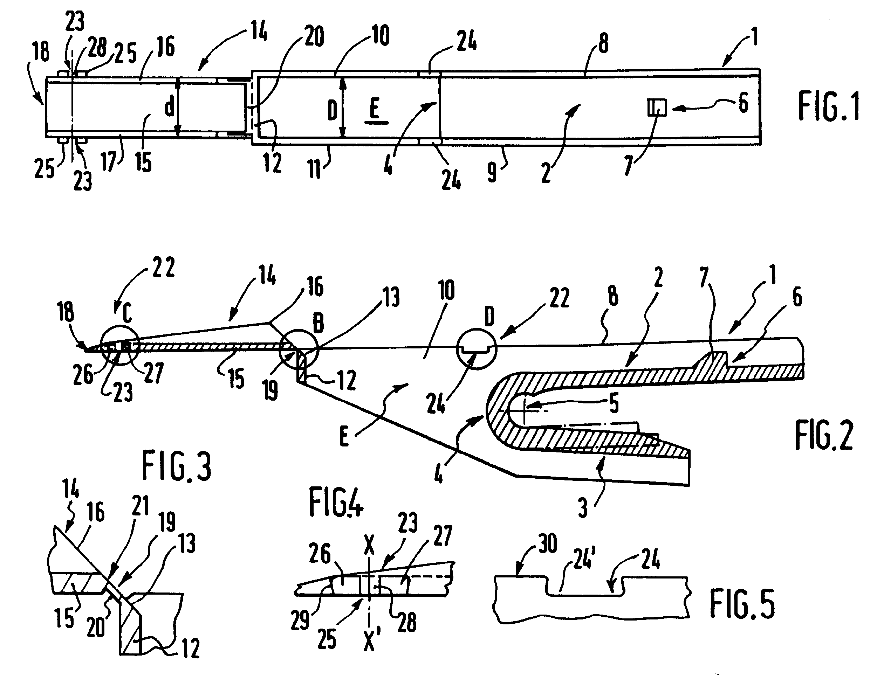

En se référant maintenant aux figures 1 et 2, il est montré un connecteur 1 à profil longitudinal sensiblement en forme de "U", de manière à présenter deux branches 2,3 élastiquement flexibles l'une par rapport à l'autre grâce à une partie courbe 4 reliant les deux branches 2,3.

De manière connue en soi, le connecteur 1 présente, en outre, un moyen de réception d'un axe consistant en un logement 5 de section transversale circulaire situé dans la partie concave que présente le connecteur 1, et des moyens d'accrochage 6 prévus sur l'une des branches, ici sur la branche supérieure 2, les moyens d'accrochage consistant généralement en un cran 7.

Egalement de manière connue en soi, le connecteur 1 comporte, de chaque côté, une bordure 8,9 consistant en un flasque sensiblement orthogonal au plan des branches 2,3, ces bordures s'étendant tout au long desdites branches.

Comme mieux visible sur les figures, la bordure 8,9 se prolonge, dans le même plan et à partir de la partie courbe 4 du connecteur 1, par une paroi 10,11, la paroi 10 étant sensiblement parallèle à la paroi 11, les deux parois 10, 11 étant reliées l'une à l'autre par une paroi transversale 12 disposée à distance de la partie courbe 4, les parois 10,11,12 délimitant avec la partie courbe 4 du connecteur 1 un espace libre E de forme générale rectangulaire.

Les parois 10,11 ont sensiblement une forme de trapèze rectangle, le côté incliné du trapèze rectangle étant formé par le bord inférieur des parois 10,11, bord rejoignant la bordure 8 de la branche 3 et l'extrémité inférieure de la paroi transversale 12.

C'est à partir du bord supérieur 13 de la paroi transversale 12 qu'est prévu un capot 14 apte à pouvoir basculer autour de cette extrémité.

Le capot 14 se compose d'une paroi de fond 15 et de deux ailes 16,17 également planes orthogonales à ladite paroi formant une section transversale en "U" dont la paroi 15 est sensiblement perpendiculaire, à l'état de repos, à la paroi 12.

Les ailes 16,17 ont une forme telle que la hauteur desdites ailes va en décroissant à partir de l'extrémité supérieure 13 de la paroi transversale 12 jusqu'à devenir nulle à l'extrémité libre 18 du capot 14.

Plus précisément, et en relation avec la figure 2, les ailes 16,17 ont une forme sensiblement triangulaire quant l'hypoténuse est confondue avec la surface interne de la paroi de fond 15 formant la base du "U" .

Avantageusement, la distance d entre les deux surfaces extérieures des ailes 16,17 est au plus égale à la distance D considérée entre les surfaces intérieures des parois longitudinales 10,11, c'est-à-dire les surfaces en vis-à-vis de l'espace E.

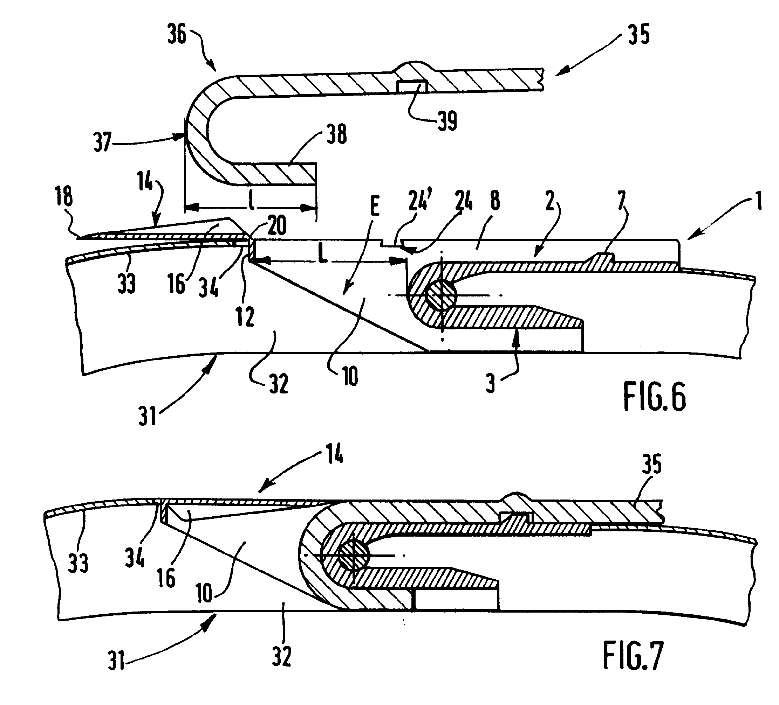

En se référant en plus à la figure 3, le capot 14 est monté basculant par rapport à l'extrémité supérieure 13 de la paroi transversale 12 par une articulation 19 du type "charnière film".

Cette articulation 19 est formée par une mince paroi souple 20 reliant l'extrémité supérieure 13 de la paroi transversale 12 avec l'extrémité 21 du capot 14 en regard de cette paroi.

Préférentiellement, le capot 14 porte des moyens de verrouillage 22 aptes à le maintenir en position fermée en utilisation.

En se référant plus précisément aux figures 4 et 5, ces moyens de verrouillage 22 consistent en une coopération mutuelle d'une partie mâle 23 portée ici par le capot 14 et d'une partie femelle 24 portée par le connecteur 1.

Comme mieux visible sur la figure 1 associées à la figure 4, la partie mâle 23 consiste en une protubérance 25 en saillie vers l'extérieur à partir des ailes 16,17 dudit capot, ces protubérances 25 étant situées dans le même plan que celui de la paroi de fond 15 du capot 14.

Les protubérances 25 sont formées par deux proéminences 26,27 séparées l'une de l'autre par un espace 28, de manière à procurer à chacune des proéminences une élasticité relative.

La proéminence 26 est symétrique, par rapport à l'axe XX' considéré au milieu de l'espace libre 28, à la proéminence 27.

La proéminence 26 présente une paroi libre 29, considérée à l'opposé de l'espace 28, de forme telle que la section de ladite proéminence va en s'amenuisant à partir de la surface de la paroi de fond 15 portant les ailes 16,17.

La proéminence 27 présente, en section, une configuration symétrique à celle de la section de la proéminence 26, de façon à obtenir une protubérance générale 25 de configuration générale en trapèze isocèle dont la grande base est confondue avec la surface de la paroi de fond 15 portant les ailes 16,17 et dont la petite base est confondue avec la surface de la paroi de fond 15 opposée à celle portant les ailes 16,17.

En se référant à la figure 5, la partie femelle 24 portée par les parois 10,11 présente un évidement 24' également de configuration en forme de trapèze isocèle, complémentaire et inverse à la forme de la partie mâle 23, de telle sorte que la petite base du trapèze isocèle soit confondue avec les bords libres extrêmes longitudinaux 30 de la paroi longitudinale 10,11 concernée.

Les positions longitudinales de la partie mâle 23 et de la partie femelle 24 sont prévues de manière à ce que ces deux parties puissent coopérer lorsque le capot 14 a basculé autour de l'extrémité supérieure 13 de la paroi transversale 12, généralement les positions respectives de ces deux parties sont sensiblement équivalentes par rapport à l'extrémité 13 de la paroi 12.

L'utilisation du connecteur tel que précédemment défini sera explicité maintenant en regard des figures 6 et 7.

Le connecteur 1 est apte à être porté par un balai d'essuie-glace 31 dont la monture principale 32 porte, de manière connue en soi, au niveau de sa paroi de fond 33, une ouverture 34 adaptée plus particulièrement à recevoir ledit connecteur et un bras 35, de sorte que le bras puisse être relié au balai de manière articulée.

L'extrémité 36 du bras est ici conformée en forme de crochet 37 en permettant ainsi le logement du connecteur 1 dans la partie concave dudit crochet.

Comme mieux visible sur la figure 6, il est prévu que la longueur l, déterminée entre la paroi extérieure de l'extrémité recourbée du crochet et l'extrémité libre de sa branche inférieure 38, soit inférieure à la distance L considérée à partir de la surface interne de la paroi 12 jusqu'à l'extrémité saillante extérieure de la partie courbe 4 que présente le connecteur entre les deux branches 2 et 3.

Bien entendu, l'ouverture 34 présente une dimension longitudinale telle qu'elle puisse recevoir avec un léger jeu le connecteur dans son ensemble, c'est-à-dire la dimension considérée entre la surface externe de la paroi 12 jusqu'à l'extrémité libre de la plus grande branche, ici la branche 2.

Ainsi, dans une première étape représentée à la figure 6, le connecteur est monté, de manière connue en soi, sur l'axe que présente l'ouverture 34 du balai.

Dans cette position, la paroi 12 se trouve en vis-à-vis du bord transversal de l'ouverture 34, les bordures 8,9 et les parois 10,11 se trouvent en contact glissant avec les bords longitudinaux de cette ouverture.

Dans une deuxième étape, l'extrémité recourbée en crochet 37 du bras 35 est amenée en regard de l'espace libre E délimité, d'une part, par la paroi transversale 12 ainsi que par la partie courbe 4, et d'autre part, par les parois longitudinales 10,11 et dans un mouvement orthogonal à la direction longitudinale du balai l'extrémité recourbée est introduite dans cet espace libre de façon à présenter la concavité du crochet 37 du bras 35 en regard de la partie convexe du connecteur 1.

Dans un mouvement considéré à partir de la figure 6 de droite à gauche, l'ensemble formé par le balai 31 et le connecteur 1 est déplacé de façon à engager le connecteur 1, par translation, dans la concavité du crochet 37, jusqu'à ce que le cran 7 porté par la branche 2 vienne coopérer avec un logement 39 prévu sur le bras d'essuie-glace 35.

Une fois cette configuration atteinte, le capot 14 est basculé, par une action manuelle sur son extrémité libre 18, autour de l'extrémité supérieure 13 de la paroi transversale 12 et ce, grâce à l'articulation en forme de charnière film 20 jusqu'à obtenir la position représentée en figure 7.

Pendant ce mouvement, les ailes 16,17 dudit capot ont pénétré à l'intérieur de l'espace libre E par glissement de leurs parois respectives, et les parties mâles 23 portées par ledit capot sont aptes à venir s'encliqueter dans les parties femelles 24 portées par les parois longitudinales 10,11, grâce à l'élasticité relative de chaque proéminence 26,27, ces proéminences 26,27 ayant tendance, lors du clipage, à se rapprocher l'une de l'autre dans l'espace 28, par coopération des parois libres 29 desdites proéminences avec les bords inclinés de l'évidement 24' en forme de trapèze isocèle de la partie femelle 24 jusqu'à reprendre leurs états initiaux une fois que la partie mâle 23 a complètement pénétré dans la partie femelle 24 et obtenir un contact complémentaire entre les parois inclinées 29 de la partie mâle 23 et les parois inclinées du trapèze isocèle que présente la partie femelle 24.

Ainsi, le capot assure non seulement la protection de l'espace libre E en interdisant toute introduction d'objets étrangers mais, de plus, donne à l'ensemble formé par le balai et le bras un aspect esthétique en obstruant cet espace vide, l'extrémité libre 18 du capot 14 recouvrant en partie l'extrémité en crochet 37 du bras 35.

La présente invention n'est pas limitée aux exemples de réalisations décrites ci-dessus, mais englobe toutes variantes dans la mesure où elles sont couvertes par les revendications.

Notamment, il peut être envisagé que le basculement du capot puisse se faire à partir de l'une des parois longitudinales 10 ou 11.

## Revendications

1. Connecteur destiné à solidariser un balai d'essuie-glace (31) avec un bras d'essuie-glace (35), muni d'une extrémité conformée en crochet (37), ledit connecteur présentant une section longitudinale de forme générale en "U" à deux branches (2,3) reliées par une partie courbe (4) de manière à se loger dans ladite extrémité en forme de crochet et étant muni de bordures (8,9) se prolongeant au delà de la partie courbe (4) par des parois longitudinales (10,11) reliées entre-elles par une paroi transversale (12) en créant un espace (E) délimité par lesdites parois longitudinales, ladite paroi transversale et ladite partie courbe, caractérisé en ce que le connecteur comporte un capot (14) apte à obstruer l'espace (E) lorsque l'extrémité conformée en crochet (37) du bras d'essuie-glace (38) repose sur la section en "U" du connecteur.

2. Connecteur selon la revendication 1, caractérisé en ce que le capot (14) est monté basculant par rapport au connecteur (1).

3. Connecteur selon la revendication 1 ou 2, caractérisé en ce que le capot (14) est monté basculant sur l'une desdites parois (10,11,12).

4. Connecteur selon l'une des revendications 1 à 3, caractérisé en ce que le capot (14) est monté basculant par une articulation (19).

5. Connecteur selon la revendication (4), caractérisé en ce que l'articulation (19) est formée par une charnière film (20).

6. Connecteur selon l'une des revendications précédentes, caractérisé en ce que le capot (14) et le connecteur (1) portent des moyens de verrouillage (22).

7. Connecteur selon l'une des revendications précédentes, caractérisé en ce que les moyens de verrouillage (21) sont formés par coopération mutuelle d'une partie mâle (23) et d'une partie femelle (24).

8. Connecteur selon l'une des revendications précédentes, caractérisé en ce que la partie mâle (23) est formée d'une protubérance (25) présentant deux proéminences (26,27) séparées par un espace (28).

9. Connecteur selon la revendication précédente, caractérisé en ce que la protubérance (25) présente, en section, une configuration générale de trapèze isocèle.

10. Connecteur selon l'une des revendications précédentes, caractérisé en ce que la partie mâle (23) est portée par le capot (14) et la partie femelle est portée par les parois longitudinales (10,11) du connecteur (1).

11. Connecteur selon l'une des revendications 3 à 10 caractérisé en ce que le capot (14) est monté basculant autour du bord supérieur (13) de ladite paroi transversal (12).

12. Connecteur selon la revendication 11 , caractérisé en ce que le capot (14) se compose d'une paroi de fond (15) et de deux ailes (16,17) orthogonales à ladite paroi de fond (15).

13. Connecteur selon la revendication 12, caractérisé en ce que la distance (d) entre les deux surfaces extérieures des ailes (16,17) est au plus égale à la distance (D) considérée entre les surfaces intérieures des parois longitudinales (10,11).

14. Connecteur selon les revendications 13 et 8, caractérisé en ce que les protubérances (25) font saillies vers l'extérieur à partir des ailes (16,17) du capot (14).

## Patentansprüche

1. Verbindungsglied, um ein Scheibenwischerblatt (31) mit einem Scheibenwischerarm (35), versehen mit einem hakenförmig ausgebildeten Ende (37), zu verbinden, wobei das genannte Verbindungsglied einen allgemein U-förmigen Längsschnitt mit zwei Schenkeln (2, 3) aufweist, die durch einen gekrümmten Teil (4) so verbunden sind, daß sie im genannten hakenförmigen Ende liegen, und versehen mit Rändern (8, 9), die über den gekrümmten Teil (4) in Form von Längswänden (10, 11) hinausgehen, die miteinander durch eine Querwand (12) verbunden sind und wodurch ein Raum (E) entsteht, der durch die genannten Längswände, die genannte Querwand und den genannten gekrümmten Teil begrenzt ist, **da****durch gekennzeichnet**, daß das Verbindungsglied eine Kappe (14) enthält, die geeignet ist, den Raum (E) zu verschließen, wenn das hakenförmig ausgebildete Ende (37) des Scheibenwischerarms (38) auf dem U-förmigen Querschnitt des Verbindungsglieds ruht.

2. Verbindungsglied nach Anspruch 1, **dadurch** **gekennzeichnet**, daß die Kappe (14) im Verhältnis zum Verbindungsglied (1) schwenkbar angebracht ist.

3. Verbindungsglied nach Anspruch 1 oder 2, **da****durch gekennzeichnet**, daß die Kappe (14) an einer der genannten Wände (10, 11, 12) schwenkbar angebracht ist.

4. Verbindungsglied nach einem der Ansprüche 1 bis 3, **dadurch gekennzeichnet**, daß die Kappe (14) mittels eines Gelenks (19) schwenkbar angebracht ist.

5. Verbindungsglied nach Anspruch 4, **dadurch** **gekennzeichnet**, daß das Gelenk (19) in Form eines Filmscharniers (20) ausgebildet ist.

6. Verbindungsglied nach einem der vorherigen Ansprüche, **dadurch gekennzeich****net**, daß die Kappe (14) und das Verbindungsglied (1) Verriegelunsgmittel (22) aufweisen.

7. Verbindungsglied nach einem der vorherigen Ansprüche, **dadurch gekennzeich****net**, daß die Verriegelungsmittel (21) durch das Zusammenwirken eines Außenteils (23) und eines Innenteils (24) gebildet werden.

8. Verbindungsglied nach einem der vorherigen Ansprüche, **dadurch gekennzeich****net**, daß der Außenteil (23) mit einer Ausstülpung (25) ausgebildet ist, die zwei durch einen Raum (28) getrennte Vorsprünge (26, 27) aufweist.

9. Verbindungsglied nach dem vorherigen Anspruch, **dadurch gekennzeichnet**, daß die Ausstülpung (25) im Querschnitt die allgemeine Konfiguration eines gleichschenkligen Trapezes hat.

10. Verbindungsglied nach einem der vorherigen Ansprüche, **dadurch gekennzeich****net**, daß der Außenteil (23) auf der Kappe (14) und der Innenteil auf den Längswänden (10, 11) des Verbindungsglieds (1) ruhen.

11. Verbindungsglied nach einem der Ansprüche 3 bis 10, **dadurch gekennzeichnet**, daß die Kappe (14) um die obere Kante (13) der genannten Querwand (12) schwenkbar angebracht ist.

12. Verbindungsglied nach Anspruch 11, **da****durch gekennzeichnet**, daß sich die Kappe (14) aus einer Bodenwand (15) und zwei Flügeln (16, 17) zusammensetzt, die orthogonal zur genannten Bodenwand (15) verlaufen.

13. Verbindungsglied nach Anspruch 12, **da****durch gekennzeichnet**, daß der Abstand (d) zwischen den beiden Außenflächen der Flügel (16, 17) im höchsten Falle gleich dem Abstand (D) zwischen den Innenflächen der Längswände (10, 11) ist.

14. Verbindungsglied nach den Ansprüchen 13 und 8, **dadurch gekennzeichnet**, daß die Ausstülpungen (25) ausgehend von den Flügeln (16, 17) der Kappe (14) nach außen vorspringen.

## Claims

1. A connector for fastening a windscreen wiper blade (31) to a windscreen wiper arm (35), having a hook-shaped end (37), the said connector having a longitudinal cross-section in the general form of a "U" with two branches (2, 3) joined together, through a curved portion (4), in such a way as to fit in the said hook-shaped end, and having edge portions (8, 9) which are extended beyond the curved portion (4) by longitudinal walls (10, 11) joined together by a transverse wall (12), to define a space (E) which is delimited by the said longitudinal walls, the said transverse wall and the said curved portion, characterised in that the connector includes a hook (14) which is adapted to obstruct the space (E) when the hook-shaped end (37) of the windscreen wiper arm (38) lies on the "U" shaped section of the connector.

2. A connector according to Claim 1, characterised in that the hood (14) is mounted for tilting movement with respect to the connector (1).

3. A connector according to Claim 1 or Claim 2, characterised in that the hood (14) is mounted for tilting movement on one of the said walls (10, 11, 12).

4. A connector according to one of Claims 1 to 3, characterised in that the hood (14) is mounted for tilting movement by means of an articulation (19).

5. A connector according to Claim 4, characterised in that the articulation (19) is defined by a film hinge (20).

6. A connector according to one of the preceding Claims, characterised in that the hood (14) and the connector (1) carry locking means (22).

7. A connector according to one of the preceding Claims, characterised in that the locking means (21) are defined by mutual cooperation of a male portion (23) and a female portion (24).

8. A connector according to one of the preceding Claims, characterised in that the male portion (23) comprises a protuberance (25) having two lugs (26, 27) separated by a space (28).

9. A connector according to the preceding Claim, characterises in that the protuberance (25) has the general cross sectional configuration of an isoqsceles trapezium.

10. A connector according to one of the preceding Claims, characterised in that the male portion (23) is carried by a hood (14), and the female portion is carried by the longitudinal walls (10, 11) of the connector (1).

11. A connector according to one of Claims 3 to 10, characterised in that the hood (14) is mounted for tilting movement about the upper edge (13) of the said transverse wall (12).

12. A connector according to Claim 11, characterised in that the hood (14) comprises a base wall (15) and two wing portions (16, 17) which are orthogonal to the said base wall (15).

13. A connector according to Claim 12, characterised in that the distance (d) between the two outer surfaces of the wing portions (16, 17) is at least equal to the distance (D) considered between the inner surfaces of the longitudinal walls (10, 11).

14. A connector according to Claims 13 and 8, characterised in that the protuberances (25) project outwardly from the wing portions (16, 17) of the hood (14).
